# EUROPÄISCHE PATENTSCHRIFT

(11) **EP 3 774 437 B1**
(45) Veröffentlichungstag und Bekanntmachung des Hinweises auf die Patenterteilung: **07.02.2024**
(21) Anmeldenummer: 19705512.2
(22) Anmeldetag: 15.02.2019
(51) Int. Cl.: B60L 53/30, B60L 53/16, H01R 13/52

(54) **KRAFTFAHRZEUG MIT EINER ELEKTRISCHEN KONTAKTIERUNGSEINHEIT**
MOTOR VEHICLE WITH AN ELECTRIC CONTACTING UNIT
VÉHICULE AUTOMOBILE POURVU D'UNE UNITÉ DE MISE EN CONTACT ÉLECTRIQUE

(30) Priorität: 12.04.2018 DE 102018205594
(43) Veröffentlichungstag der Anmeldung: 17.02.2021
(73) Patentinhaber: Bayerische Motoren Werke Aktiengesellschaft, 80809 München (DE)
(72) Erfinder: GOLDAMMER, Stefan, 85276 Pfaffenhofen an der Ilm (DE); HOESS, Bernhard, 80995 Muenchen (DE); EWALD, Alexander, 85748 Garching (DE)
(86) Internationale Anmeldenummer: PCT/EP2019/053819
(87) Internationale Veröffentlichungsnummer: WO 2019/197070

(56) Entgegenhaltungen:
- WO-A1-2019/060939
- DE-A1-102009 001 080
- DE-A1-102010 028 126
- DE-A1-102013 021 849
- DE-A1-102014 115 907
- FR-A1- 2 972 081

## Beschreibung

Die Erfindung betrifft ein Kraftfahrzeug mit einer elektrischen Kontaktierungseinheit nach dem Oberbegriff des Patentanspruchs 1.

Elektro- und Plug-In-Hybrid-Fahrzeuge bieten die Möglichkeit, eine Batterie des Fahrzeugs an einer herkömmlichen Haushaltssteckdose oder einer Ladesäule mit einem Ladekabel zu laden. Dieses Ladekabel beinhaltet üblicherweise einen Stecker, welcher eine Schnittstelle zu der Haushaltssteckdose oder zu der Ladesäule aufweist.

Derartige Ladekabel werden üblicherweise von Fahrzeugherstellern mit dem entsprechenden Fahrzeug mitgeliefert und beispielsweise im Kofferraum untergebracht. Falls ein Benutzer die Batterie des Fahrzeugs aufladen möchte, muss er das entsprechende Ladekabel aus dem Kofferraum entnehmen und dieses an der Haushaltssteckdose oder an der Ladesäule anschließen und zudem eine entsprechende Klappe am Fahrzeug öffnen, um das Ladekabel mit der entsprechenden Ladedose des Fahrzeugs zu verbinden. Nach dem Ladevorgang muss er wiederum das Ladekabel aus der Haushaltssteckdose oder von der Ladesäule entfernen und ebenfalls das Ladekabel aus der fahrzeugseitigen Ladebuchse entfernen und das Ladekabel wiederum im Kofferraum verstauen.

Nachteilig hierbei sind die relativ aufwendige Handhabung des Ladekabels und der damit einhergehende Zeitbedarf. Insbesondere bei beladenem Kofferraum wird die Entnahme des Ladekabels zusätzlich erschwert. Ferner wird das Kofferraumvolumen durch die Ladekabelunterbringung verringert.

Zur Beseitigung dieser Nachteile ist es bekannt, sogenannte Laderoboter oder automatisierte Kontaktierungssysteme zu verwenden, die ein Elektro- oder Plug-In-Hybrid-Fahrzeug selbsttätig mit dem Stromnetz zum Laden der Batterie verbinden können, ohne dass der Fahrzeugnutzer manuell selber ein Ladekabel anschließen muss.

Beispielsweise ist aus der DE 697 14 879 T2 ein induktives Ladesystem bekannt, bei dem eine Primärspule in unmittelbare Nähe zu einer Sekundärspule am Kraftfahrzeug verlagert wird, sodass die Batterie des Kraftfahrzeugs induktiv geladen werden kann.

Die Firma Volterio offenbart auf ihrer Internet-Homepage www.volterio.com einen Laderoboter, der einen konischen Stecker automatisiert zu einer fahrzeugseitigen Steckeraufnahme verlagern und mit dieser verbinden kann, sodass die Batterie des Fahrzeugs konduktiv geladen werden kann.

Mit Hilfe solcher Laderoboter oder automatisierter Kontaktierungssysteme kann eine Batterie eines Elektro- oder Plug-In-Hybrid-Fahrzeugs aufgeladen werden, ohne dass ein Fahrzeugnutzer das Fahrzeug manuell mit einer Ladesäule oder Steckdose verbinden muss. Dabei erfolgt die Kontaktierung des Fahrzeugs üblicherweise auf der Fahrzeugunterseite in Fahrzeughöhenrichtung von unten. Allerdings ist insbesondere die Fahrzeugunterseite besonders stark Spritzwasser und Schmutz ausgesetzt.

Aus der nicht vorveröffentlichten AT 520449 A4, sowie aus der WO 2019060939 A1, die deren Priorität beansprucht, ist bereits eine elektrische Kontaktierungseinheit für ein Kraftfahrzeug bekannt, die eine verlagerbare Abdeckung aufweist. Die Abdeckung deckt in einer Schutzstellung die elektrischen Kontakte der Kontaktierungseinheit ab und schützt sie so vor Schmutz und/oder Wasser. In der Ladestellung sind die elektrischen Kontakte zugänglich.

Als weiterer Stand der Technik sind die DE 10 2014 115907 A1, die FR 2 972 081 A1 und die DE 10 2009 001 080 A1 zu nennen.

Aufgabe der Erfindung ist es, ein Kraftfahrzeug mit einer elektrischen Kontaktierungseinheit mit elektrischen Kontakten zu schaffen, die vor Verschmutzung und Spritzwasser geschützt sind.

Diese Aufgabe wird mit einem Kraftfahrzeug mit einer elektrischen Kontaktierungseinheit mit den Merkmalen des Patentanspruchs 1 gelöst.

Erfindungsgemäß weist ein Kraftfahrzeug eine fest mit dem Kraftfahrzeug verbundene elektrische Kontaktierungseinheit zur elektrischen Kontaktierung eines externen Ladekabels auf. Die Kontaktierungseinheit umfasst zumindest elektrische Kontakte sowie eine verlagerbare Abdeckung, die zwischen einer Schutzstellung, in der sie die elektrischen Kontakte abdeckt und so vor Schmutz und/oder Wasser schützt, und einer Ladestellung translatorisch verlagerbar ist, in der die elektrischen Kontakte von der Fahrzeugumgebung aus zugänglich sind.

Die elektrische Kontaktierungseinheit ist außen an der Fahrzeugunterseite angebracht und ist somit allen Umwelteinflüssen voll ausgesetzt. Dazu zählen beispielsweise Regen, Schnee, Staub und sonstige Verschmutzungen, aber auch mechanische Belastungen beispielsweise durch Steinschlag oder auch Poller. Die Abdeckung dient in der Schutzstellung zum Schutz der eigentlichen elektrischen Kontakte durch diese Umwelteinflüsse. Die Abdeckung hält dabei Regen, Schnee, Staub oder sonstige Verschmutzungen davon ab, an die elektrischen Kontakte zu gelangen. Nur zum Aufladen der Batterie wird die schützende Abdeckung aus der Schutzstellung in die Ladestellung verlagert, in der die elektrischen Kontakte zugänglich sind, sodass ein Ladekabel mit den elektrischen Kontakten verbunden werden kann.

Dabei ist die Abdeckung ein länglicher Hohlkörper und umgibt in der Schutzstellung die elektrischen Kontakte umlaufend, während sich die Abdeckung in der Ladestellung neben den elektrischen Kontakten befindet. In der Schutzstellung befinden sich die elektrischen Kontakte also in dem Hohlraum der Abdeckung. In der Ladestellung dagegen befindet sich die Abdeckung neben den elektrischen Kontakten, sodass diese frei zugänglich sind und das Anschließen eines Ladekabels problemlos möglich ist.

Dabei weist der längliche Hohlkörper der Abdeckung einen rechteckigen oder trapezförmigen Querschnitt auf. Die Abdeckung besteht also aus zwei zueinander parallelen Wänden, die mit zwei weiteren Wänden beidseitig miteinander verbunden sind, sodass ein Hohlkörper entsteht. Ein solcher Hohlkörper ermöglicht eine besonders flache Bauweise der Abdeckung.

Die Abdeckung weist eine geschlossene Stirnseite auf, sodass die Abdeckung nur mehr eine offene Stirnseite aufweist. Beim Verlagern der Abdeckung aus der Ladestellung in die Schutzstellung schiebt sich die Abdeckung mit der offenen Stirnseite über die elektrischen Kontakte, bis diese sich vollständig in dem Hohlraum in der Abdeckung befinden.

In einer vorteilhaften Ausgestaltung erfolgt die translatorische Verlagerbarkeit der Abdeckung in Richtung der Längserstreckung der Abdeckung. Die translatorische Verlagerung der Abdeckung kann manuell erfolgen. Bevorzugt erfolgt die Verlagerung aber fremdkraftbetrieben, also beispielsweise mit Hilfe eines Elektromotors. Auf diese Weise muss der Nutzer zum Aufladen der Batterie nicht zur elektrischen Kontaktierungseinheit hingehen und die Abdeckung aus der Schutzstellung in die Ladestellung von Hand verschieben, sondern die Verlagerung kann automatisch beispielsweise auf Knopfdruck oder aufgrund eines Steuersignals beispielsweise eines Laderoboters erfolgen, sodass der Nutzer nicht zur elektrischen Kontaktierungseinheit hingehen muss und idealerweise sogar keinerlei Aktionen vornehmen muss, um die Batterie aufladen zu lassen.

Bevorzugt weist die fahrzeugfeste elektrische Kontaktierungseinheit einen Grundträger auf, der am Kraftfahrzeug angebunden ist, und an dem die elektrischen Kontakte angebracht sind. Der Grundträger kann dazu beispielsweise einen Montageabschnitt zur Befestigung am Fahrzeug aufweisen.

Wenn die elektrische Kontaktierungseinheit auf der Fahrzeugunterseite angebracht ist, kann sie bei einer Wasserdurchfahrt extrem hohen Beanspruchungen ausgesetzt sein. Damit auch in einem solchen Fall die elektrischen Kontakte vor Feuchtigkeit geschützt sind, kann eine Dichtung zwischen der Abdeckung und dem Grundträger vorgesehen sein, die so angeordnet ist, dass die Abdeckung in der Schutzstellung umlaufend zum Grundträger abgedichtet ist. Die Dichtung kann dazu entweder am Grundträger oder an der Abdeckung angebracht sein. Idealerweise ist die Dichtung um die offene Stirnseite herum umlaufend an der Abdeckung angebracht.

Zusätzlich kann der Grundträger eine Wand aufweisen, an der die Abdeckung mit der offenen Seite umlaufend in der Schutzstellung anliegt. Diese Wand kann beispielsweise vom Montageabschnitt des Grundträgers abstehen. Die elektrischen Kontakte können dann beispielsweise im mittleren Bereich dieser Wand angebracht sein. In der Schutzstellung der Abdeckung befinden sich dann die elektrischen Kontakte im Hohlraum der Abdeckung, der allseitig geschlossen ist. Die eine Stirnseite der Abdeckung ist sowieso geschlossen, die andere offene Stirnseite liegt an der Wand an, sodass sie ebenfalls verschlossen ist. Auf diese Weise sind die elektrischen Kontakte bereits sehr gut vor allen möglichen schädlichen Umwelteinflüssen geschützt. Die Dichtung kann dann zusätzlich die Abdeckung in der Schutzstellung beispielsweise gegenüber dieser Wand abdichten. Alternativ kann der Grundträger aber auch anders ausgestaltete Abschnitte aufweisen, an denen die Dichtung dichtend in der Schutzstellung der Abdeckung anliegen kann.

Eine weitere Belastung stellt Spritz- oder Gischtwasser dar, das meist vermischt mit Schmutz an nahezu alle Stellen an der Außenseite eines Kraftfahrzeugs während der Fahrt gelangt. Es muss daher davon ausgegangen werden, dass solches Spritz- oder Gischtwasser auch an die elektrische Kontaktierungseinheit gelangt. In der Schutzstellung sind die elektrischen Kontakte gut geschützt. Es besteht aber ein gewisses Risiko, dass beim Verlagern der Abdeckung in die Ladestellung Spritz- oder Gischtwasser, das sich auf bzw. an der Abdeckung befindet, beim Verlagern der Abdeckung von dieser herunterläuft. Um nun zu vermeiden, dass dieses abtropfende Spritz- oder Gischtwasser versehentlich beim Verlagern der Abdeckung auf die elektrischen Kontakte gelangen kann, kann die Abdeckung vorteilhafterweise zumindest einen abstehenden Steg aufweisen, der das Spritz- und/oder Gischtwasser, das sich auf und/oder an der Abdeckung befindet, gezielt ableitet und von den elektrischen Kontakten abhält.

Weitere vorteilhafte Ausgestaltungen sind Gegenstand von Unteransprüchen.

In der Zeichnung ist ein Ausführungsbeispiel der Erfindung dargestellt, anhand dessen die Erfindung im Folgenden näher beschrieben wird. Die einzelnen Figuren zeigen in schematischer Darstellungsweise:
- Fig. 1: einen bereits bekannten Laderoboter,
- Fig. 2: eine perspektivische Ansicht einer fahrzeugseitigen Kontaktierungseinheit für den Laderoboter,
- Fig. 3: eine weitere perspektivische Ansicht der in Fig. 2 dargestellten fahrzeugseitigen Kontaktierungseinheit und
- Fig. 4: eine dritte perspektivische Ansicht der in Fig. 2 dargestellten fahrzeugseitigen Kontaktierungseinheit.

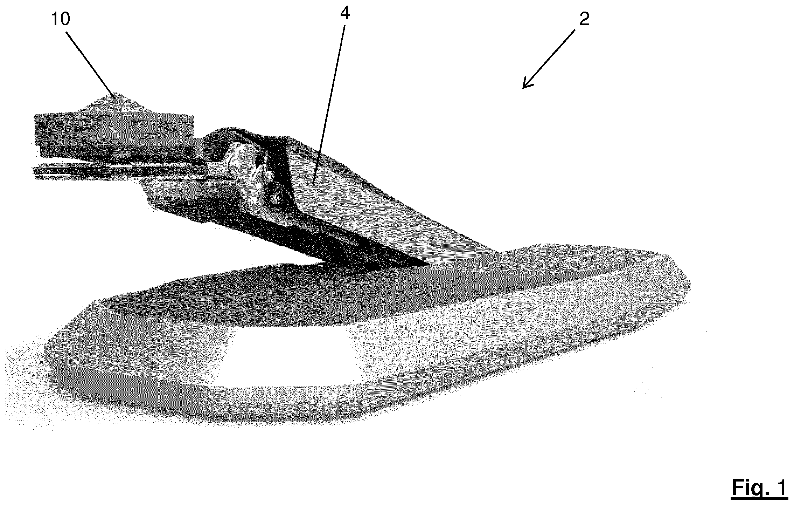

In Fig. 1 ist ein Laderoboter 2 der Firma Volterio gezeigt. Der Laderoboter 2 ist insbesondere für den Einsatz auf privaten Grundstücken zum Laden einer Batterie eines Elektro- oder Plug-In-Hybrid-Fahrzeugs gedacht. Er ist zum Einsatz auf einem zumindest größtenteils ebenen Boden konzipiert und zeichnet sich durch eine sehr flache Bauweise aus, sodass das zu ladende Elektro- oder Plug-In-Hybrid-Fahrzeug zwischen den Rädern zumindest teilweise über den Laderoboter 2 fahren kann. Das Kraftfahrzeug weist an seiner Unterseite eine elektrische Kontaktierungseinheit auf. Das zu dieser Kontaktierungseinheit passende Gegenstück befindet sich an einem verfahrbaren Arm 4 des Laderoboters 2. Sobald das Fahrzeug sich in der Reichweite des Laderoboters 2 befindet, kann dieser automatisch in die richtige Position fahren und den Arm 4 nach oben verschwenken, sodass der elektrische Kontakt zwischen dem mit dem Laderoboter 2 verbundenen Ladekabel und der elektrischen Kontaktierungseinheit an der Unterseite des Kraftfahrzeugs hergestellt wird und so die Batterie des Kraftfahrzeugs aufgeladen werden kann. Zur Kontaktierung und zum Starten des Aufladevorgangs muss der Fahrzeugnutzer nicht mehr aktiv werden, vielmehr erfolgt die gesamte Kontaktierung des Ladekabels über den Laderoboter 2 vollautomatisch.

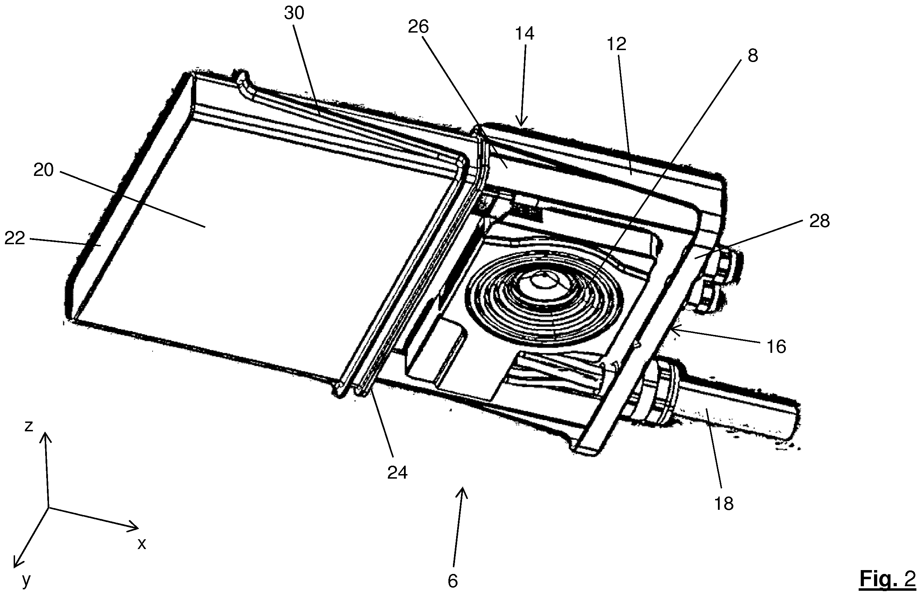

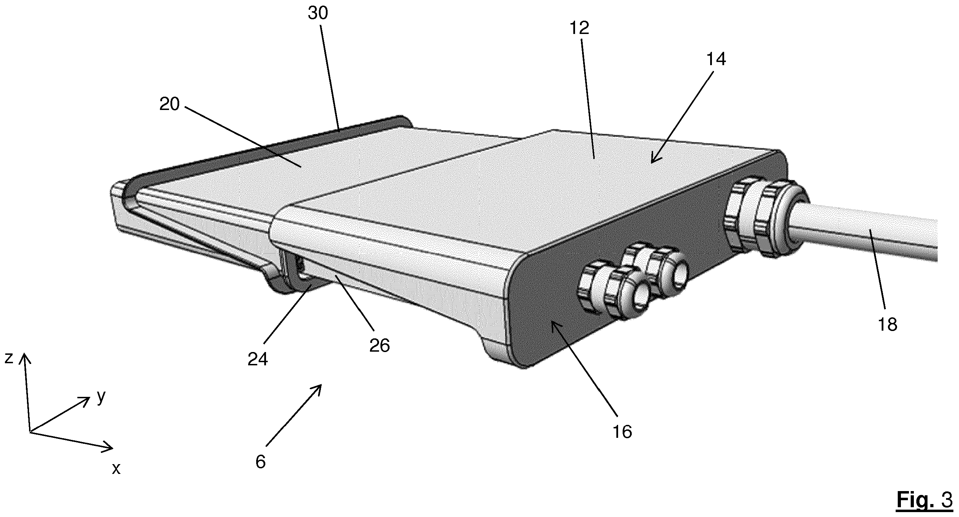

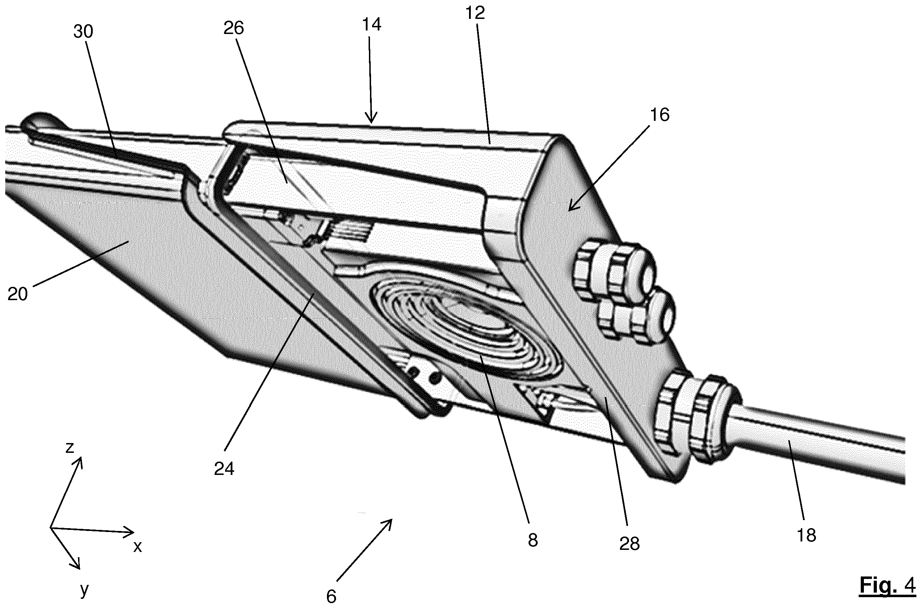

Zur Erleichterung der automatischen Kontaktierung weist die elektrische Kontaktierungseinheit 6, wie sie in den Figuren 2 bis 4 gezeigt ist, ringförmige elektrische Kontakte 8 mit unterschiedlichen Durchmessern auf, die zentrisch ineinander angeordnet sind, und die quasi die Gegenform für einen Konus bilden. Das zu diesen ringförmigen elektrischen Kontakten 8 der elektrischen Kontaktierungseinheit 6 passende Gegenstück 10 befindet sich an dem verfahrbaren Arm 4 des Laderoboters 2 und hat die entsprechende konische Form. Der große Vorteil der konischen Form besteht darin, dass beim Hochschwenken des Arms 4 des Laderoboters 2 sich das Gegenstück 10 zu elektrischen Kontakten 8 aufgrund der geometrischen Form selbst zentriert. Damit muss der Laderoboter 2 zum Kontaktieren nicht hochpräzise die elektrischen Kontakte 8 mit dem Gegenstück 10 treffen, es reicht aus, wenn beim Hochschwenken des Arms 4 mit dem Gegenstück 4 dieses zumindest in den äußersten Ring der elektrischen Kontakte 8 trifft. Bei einem weiteren Hochschwenken des Arms 4 kann sich das Gegenstück 10 in den elektrischen Kontakten 8 selbstzentrieren, wenn der Laderoboter 2 dabei die erforderliche geringe Beweglichkeit seitwärts und vor und zurück zulässt.

In den Figuren 2 bis 4 ist aus unterschiedlichen Blickwinkeln die elektrische Kontaktierungseinheit 6 gezeigt, die an der Unterseite des Elektro- oder Plug-In-Hybrid-Kraftfahrzeugs angebracht ist. Die elektrische Kontaktierungseinheit 6 weist die bereits beschriebenen ringförmigen elektrischen Kontakte 8 mit unterschiedlichen Durchmessern auf, die eine Gegenform für einen Konus bilden. Dabei weitet sich der Konus in Fahrzeughöhenrichtung z nach unten, sodass der Laderoboter 2 gut in Fahrzeughöhenrichtung z von unten kontaktieren kann.

Die elektrische Kontaktierungseinheit 6 weist einen Grundträger 12 auf, über den die elektrische Kontaktierungseinheit 6 an der dem Untergrund zugewandten Unterseite des Kraftfahrzeugs angebracht ist. Der Grundträger 12 umfasst unter anderem eine ebene Montageplatte 14, mit der die elektrische Kontaktierungseinheit 6 am Kraftfahrzeug angebracht ist, und eine an einem Randbereich der Montageplatte 14 annähernd lotrecht davon in Fahrzeughöhenrichtung z nach unten abstehende Aufnahmeplatte 16. Im mittleren Bereich der Aufnahmeplatte 16 sind seitlich abstehend die elektrischen Kontakte 8 angebunden. Von den elektrischen Kontakten 8 verläuft ein Kabel 18 durch die Aufnahmeplatte 16 hindurch zu der aufzuladenden Batterie hin.

Zum automatischen Kontaktieren des Ladekabels an die elektrische Kontaktierungseinheit 6 mit Hilfe des Laderoboters 2 müssen die elektrischen Kontakte 8 in Fahrzeughöhenrichtung z von unten so frei zugänglich sein, wie es in den Figuren 2 bis 4 gezeigt ist. Während der Fahrt dagegen würden die elektrischen Kontakte 8 nass und schmutzig werden. Zudem könnten sie beispielsweise durch Steinschlag mechanisch beschädigt werden. Daher müssen die elektrischen Kontakte 8 während der Fahrt mit einer Abdeckung 20 geschützt werden.

Die Abdeckung 20 besteht aus einem länglichen Hohlkörper mit einem flachen, rechteckigen Querschnitt. Dabei sind die Kanten abgerundet ausgeführt. Die in Fahrzeuglängsrichtung x gesehen vordere Stirnseite 22 der Abdeckung ist geschlossen, die hintere Stirnseite ist dagegen offen. Die hintere Stirnseite weist umlaufend einen nach außen abstehenden Kragen auf, an dem eine umlaufende Dichtung 24 aufgebracht ist, die der Aufnahmeplatte 16 zugewandt ist.

Die Abdeckung 20 ist translatorisch in Fahrzeuglängsrichtung x zwischen einer Ladestellung und einer Schutzstellung verlagerbar. In der in den Figuren 2 bis 4 gezeigten Ladestellung befindet sich die Abdeckung 20 in Fahrzeuglängsrichtung x gesehen vor den elektrischen Kontakten 8. In der Schutzstellung ist die Abdeckung 20 ist Fahrzeuglängsrichtung x nach hinten verschoben, sodass sich die elektrischen Kontakte 8 in dem Hohlraum der Abdeckung 20 befinden. In der Schutzstellung der Abdeckung 20 liegt die Dichtung 24 umlaufend dichtend an der Aufnahmeplatte 16 an. Somit sind die elektrischen Kontakte 8 in der Schutzstellung der Abdeckung 20 von allen Seiten geschützt. Vorne und um die elektrischen Kontakte 8 herum bildet die Abdeckung 20 selber den Schutz, während in Fahrzeuglängsrichtung x gesehen hinten die Abdeckplatte 16 den erforderlichen Schutz bietet, die umlaufend dichtend an der hinteren Stirnseite bzw. an der Dichtung 24 an der hinteren Stirnseite der Abdeckung 20 anliegt. Auf diese Weise sind die elektrischen Kontakte 8 in der Schutzstellung optimal vor Schmutz und Feuchtigkeit geschützt.

Um eine kontrollierte translatorische Verlagerbarkeit der Abdeckung 20 zu gewährleisten, weist der Grundträger 12 der elektrischen Kontaktierungseinheit 6 beidseitig Längsführungen 26 auf, die die Abdeckung 20 in Fahrzeuglängsrichtung x definiert führen. Zusätzlich weist der Grundträger 12 um die Abdeckplatte 16 herum einen in Fahrzeuglängsrichtung x nach vorne abstehenden Steg 28 auf, der in der Schutzstellung der Abdeckung 20 die Dichtung 24 vor der direkten Exposition der Umwelteinflüsse schützt, sodass beispielsweise kein Schmutzwasser direkt an die Dichtung 24 spritzen kann.

Die Verlagerung der Abdeckung 20 erfolgt fremdkraftbetätigt über einen elektrischen Antrieb mit einer Spindel. Da die elektrische Kontaktierungseinheit 6 an der Fahrzeugunterseite angebracht ist, ist sie für einen Fahrzeugnutzer nicht oder nur extrem schwer zugänglich. Zudem soll die Kontaktierung des Ladekabels automatisch über den Laderoboter 2 erfolgen. Daher wäre es widersinnig, wenn zuvor manuell die Abdeckung 20 aus der Schutzstellung in die Ladestellung verlagert werden müsste. Deshalb erfolgt die Verlagerung mit Hilfe eines elektrischen Antriebs, der seine rotatorische Bewegung über eine Spindel in eine Längsbewegung umsetzt. Das entsprechende Schaltsignal zum Betätigen des elektrischen Antriebs kann von einer Steuereinheit ausgehen, die erkennt, dass die Batterie des Kraftfahrzeugs aufgeladen werden soll. Diese Steuereinheit kann die dafür notwendigen Signale erhalten vom Fahrzeug selber, das den aktuellen Ladezustand der Batterie kennt, vom Fahrzeugnutzer und/oder vom Laderoboter 2, der die elektrische Kontaktierungseinheit 6 kontaktieren kann.

Die Abdeckung 20 ist insbesondere während der Fahrt voll allen Umwelteinflüssen ausgesetzt. Aufgrund der Anordnung an der Fahrzeugunterseite gelangt insbesondere Gischtwasser und Schmutz in durchaus nennenswertem Umfang an die Außenseite der Abdeckung 20. Hierbei ist es wichtig, dass beim Abstellen des Fahrzeugs und beim Verlagern der Abdeckung 20 aus der Schutzstellung in die Ladestellung nicht versehentlich Schmutz und / oder Wasser von der Außenseite der Abdeckung 20 an die elektrischen Kontakte 8 gelangen kann. Deshalb ist an der Außenseite der Abdeckung 20 umlaufend ein nach außen abstehender Steg 30 angebracht, der vor allem Wasser gezielt von der Abdeckung 20 ableitet und so verhindert, dass bei einem Verschieben der Abdeckung 20 Wasser und/oder Schmutz an die elektrischen Kontakte 8 gelangen kann. Dieser Steg 30 verläuft an den Seiten der Abdeckung 20 in einem flachen Winkel abfallend zur Unterseite der Abdeckung 20, wo er in Fahrzeugquerrichtung y nahe zum Kragen an der hinteren Stirnseite der Abdeckung 20 verläuft.

Diese erfindungsgemäße Ausführung einer elektrischen Kontaktierungseinheit 6 ermöglicht eine sehr flache Bauweise, die insbesondere in Fahrzeughöhenrichtung z wenig Bauraum beansprucht. Zudem bietet sie auf einfache Weise einen sehr sicheren Schutz der elektrischen Kontakte 8.

## Patentansprüche

1. Kraftfahrzeug mit einer fahrzeugfesten elektrischen Kontaktierungseinheit (6) zur elektrischen Kontaktierung eines externen Ladekabels, wobei die Kontaktierungseinheit (6) zumindest elektrische Kontakte (8) sowie eine verlagerbare Abdeckung (20) aufweist, wobei die Abdeckung (20) translatorisch zwischen einer Schutzstellung, in der sie die elektrischen Kontakte (8) abdeckt und so vor Schmutz und/oder Wasser schützt, und einer Ladestellung verlagerbar ist, in der die elektrischen Kontakte (8) von der Fahrzeugumgebung aus zugänglich sind, wobei die fahrzeugfeste elektrische Kontaktierungseinheit (6) außen an der Fahrzeugunterseite angebracht ist, sodass in der Ladestellung der Abdeckung (20) die elektrischen Kontakte (8) in Fahrzeughöhenrichtung (z) von unten kontaktierbar sind, wobei die Abdeckung (20) ein länglicher Hohlkörper mit einem rechteckigen oder trapezförmigen Querschnitt ist, also aus zwei zueinander parallelen Wänden, die mit zwei weiteren Wänden verbunden sind, besteht, sodass ein Hohlkörper entsteht, wobei die Abdeckung (20) eine geschlossene Stirnseite (22) aufweist, sodass sie nur mehr eine offene Stirnseite aufweist, und wobei die Abdeckung (20) in der Schutzstellung die elektrischen Kontakte (8) umlaufend umgibt, während sich die Abdeckung (20) in der Ladestellung neben den elektrischen Kontakten befindet.

2. Kraftfahrzeug nach Anspruch 1, **dadurch gekennzeichnet, dass** die Abdeckung (20) fremdkraftgetrieben zwischen der Ladestellung und der Schutzstellung verlagerbar ist.

3. Kraftfahrzeug nach einem der vorhergehenden Ansprüche, **dadurch gekennzeichnet, dass** die fahrzeugfeste elektrische Kontaktierungseinheit (6) einen Grundträger (12) aufweist, der am Kraftfahrzeug angebunden ist, und an dem die elektrischen Kontakte (8) angebracht sind.

4. Kraftfahrzeug nach Anspruch 3, **dadurch gekennzeichnet, dass** am Grundträger (12) eine Dichtung (24) angebracht ist, an der die Abdeckung (20) in der Schutzstellung dichtend anliegt.

5. Kraftfahrzeug nach Anspruch 3, **dadurch gekennzeichnet, dass** an der Abdeckung (20) umlaufend eine Dichtung (24) angebracht ist, die in der Schutzstellung am Grundträger (12) dichtend anliegt.

6. Kraftfahrzeug nach Anspruch 5, **dadurch gekennzeichnet, dass** um die offene Stirnseite herum umlaufend eine Dichtung (24) an der Abdeckung (20) angebracht ist.

7. Kraftfahrzeug nach Anspruch 5 oder 6, **dadurch gekennzeichnet, dass** der Grundträger (12) eine Wand (16) aufweist, an der die Dichtung (24) in der Schutzstellung der Abdeckung (20) umlaufend anliegt.

8. Kraftfahrzeug nach einem der Ansprüche 3 bis 7, **dadurch gekennzeichnet, dass** der Grundträger (12) zumindest eine Längsführung (26) für die Abdeckung (20) aufweist.

9. Kraftfahrzeug nach einem der Ansprüche 3 bis 8, **dadurch gekennzeichnet, dass** die Abdeckung (20) zumindest einen abstehenden Steg (30) aufweist, der Spritz- und/oder Gischtwasser, das sich auf und/oder an der Abdeckung (20) befindet, ableitet.

10. Kraftfahrzeug nach einem der vorhergehenden Ansprüche, **dadurch gekennzeichnet, dass** die Abdeckung (20) in Richtung der Längserstreckung der Abdeckung (20) verlagerbar ist.

## Claims

1. Motor vehicle having an electrical contacting unit (6) which is fixed to the vehicle and which serves for the electrical contacting of an external charging cable, wherein the contacting unit (6) has at least electrical contacts (8) and a displaceable cover (20), wherein the cover (20) is displaceable in translation between a protective position, in which it covers the electrical contacts (8) and thus protects them against dirt and/or water, and a charging position, in which the electrical contacts (8) are accessible from the vehicle surroundings, wherein the electrical contacting unit (6) which is fixed to the vehicle is attached to the underside of the vehicle on the outside, with the result that, in the charging position of the cover (20), the electrical contacts (8) can be contacted from underneath in the vehicle vertical direction (z), wherein the cover (20) is an elongate hollow body with a rectangular or trapezoidal cross section, that is to say consists of two mutually parallel walls connected by two other walls, resulting in a hollow body, wherein the cover (20) has a closed end side (22), with the result that it now has only one open end side, and wherein, in the protective position, the cover (20) surrounds the electrical contacts (8) in encircling fashion, whereas the cover (20), in the charging position, is situated adjacent to the electrical contacts.

2. Motor vehicle according to Claim 1, **characterized in that** the cover (20) is displaceable between the charging position and the protective position in a manner driven by external power by means of a drive.

3. Motor vehicle according to either of the preceding claims, **characterized in that** the electrical contacting unit (6) fixed to the vehicle has a main support (12) which is connected to the motor vehicle and to which the electrical contacts (8) are attached.

4. Motor vehicle according to Claim 3, **characterized in that** a seal (24) is attached to the main support (12), against which seal the cover (20) bears sealingly in the protective position.

5. Motor vehicle according to Claim 3, **characterized in that** a seal (24) is attached in encircling fashion to the cover (20), which seal bears sealingly against the main support (12) in the protective position.

6. Motor vehicle according to Claim 5, **characterized in that** a seal (24) is attached, in encircling fashion around the open end side, to the cover (20).

7. Motor vehicle according to Claim 5 or 6, **characterized in that** the main support (12) has a wall (16) against which the seal (24) bears in encircling fashion in the protective position of the cover (20).

8. Motor vehicle according to one of Claims 3 to 7, **characterized in that** the main support (12) has at least one longitudinal guide (26) for the cover (20) .

9. Motor vehicle according to one of Claims 3 to 8, **characterized in that** the cover (20) has at least one protruding web (30), which dissipates splash and/or spray water situated on the cover (20).

10. Motor vehicle according to one of the preceding claims, **characterized in that** the cover (20) is displaceable in the direction of the longitudinal extent of the cover (20).

## Revendications

1. Véhicule automobile équipé d'une unité (6) de contact électrique fixée au véhicule pour un contact électrique avec un câble de charge externe, l'unité de contact (6) présentant au moins des contacts électriques (8) ainsi qu'un couvercle (20) déplaçable, le couvercle (20) étant déplaçable en translation entre une position de protection, dans laquelle il recouvre les contacts électriques (8) et les protège ainsi de la saleté et/ou de l'eau, et une position de chargement dans laquelle les contacts électriques (8) sont accessibles depuis l'environnement du véhicule, l'unité (6) de contact électrique solidaire du véhicule étant montée à l'extérieur sur le côté inférieur du véhicule, de sorte que, dans la position de chargement du couvercle (20), les contacts électriques (8) sont aptes à être contactés par le bas dans le sens de la hauteur du véhicule (z), le couvercle (20) étant un corps creux allongé de section rectangulaire ou trapézoïdale, donc constitué de deux parois parallèles l'une à l'autre, qui sont reliées à deux autres parois, de manière à former un corps creux, le couvercle (20) présentant une face frontale fermée (22), de sorte qu'il ne présente plus qu'une face frontale ouverte, et le couvercle (20) entourant de manière périphérique les contacts électriques (8) dans la position de protection, tandis que le couvercle (20) se trouve à côté des contacts électriques dans la position de charge.

2. Véhicule automobile selon la revendication 1, **caractérisé en ce que** le couvercle (20) est apte à être déplacé par une force extérieure entre la position de charge et la position de protection.

3. Véhicule automobile selon l'une des revendications précédentes, **caractérisé en ce que** l'unité (6) de contact électrique solidaire du véhicule comporte un support de base (12) qui est fixé au véhicule automobile et sur lequel sont montés les contacts électriques (8).

4. Véhicule automobile selon la revendication 3, **caractérisé en ce qu'**un joint d'étanchéité (24) est monté sur le support de base (12), contre lequel le couvercle (20) s'applique de manière étanche dans la position de protection.

5. Véhicule automobile selon la revendication 3, **caractérisé en ce qu'**un joint d'étanchéité (24) est monté sur le pourtour du couvercle (20), lequel s'applique de manière étanche contre le support de base (12) dans la position de protection.

6. Véhicule automobile selon la revendication 5, **caractérisé en ce qu'**un joint d'étanchéité (24) est monté sur le couvercle (20) sur tout le pourtour de la face frontale ouverte.

7. Véhicule automobile selon la revendication 5 ou 6, **caractérisé en ce que** le support de base (12) présente une paroi (16) contre laquelle le joint d'étanchéité (24) s'applique sur tout le pourtour du couvercle (20) lorsque celui-ci est en position de protection.

8. Véhicule automobile selon l'une des revendications 3 à 7, **caractérisé en ce que** le support de base (12) comporte au moins un guide longitudinal (26) pour le couvercle (20).

9. Véhicule automobile selon l'une des revendications 3 à 8, **caractérisé en ce que** le couvercle (20) présente au moins une nervure (30) en saillie qui évacue les éclaboussures et/ou les embruns qui se trouvent sur et/ou contre le couvercle (20).

10. Véhicule automobile selon l'une des revendications précédentes, **caractérisé en ce que** le couvercle (20) est déplaçable dans le sens de l'extension longitudinale du couvercle (20) .
